(19) Europäisches Patentamt
European Patent Office
Office européen des brevets

(11) **EP 1 392 987 B1**

(12) **FASCICULE DE BREVET EUROPEEN**

(45) Date de publication et mention
de la délivrance du brevet:
**03.08.2005 Bulletin 2005/31**

(51) Int Cl.[7]: **F16F 15/03**, B64C 27/00

(21) Numéro de dépôt: 02747509.4

(86) Numéro de dépôt international:
**PCT/FR2002/001925**

(22) Date de dépôt: **06.06.2002**

(87) Numéro de publication internationale:
**WO 2002/099309 (12.12.2002 Gazette 2002/50)**

(54) **DISPOSITIF D'AMORTISSEMENT DE VIBRATIONS**

SCHWINGUNGSTILGER

VIBRATION DAMPING DEVICE

(84) Etats contractants désignés:
**AT BE CH CY DE DK ES FI FR GB GR IE IT LI LU
MC NL PT SE TR**

(30) Priorité: **06.06.2001 FR 0107352**

(43) Date de publication de la demande:
**03.03.2004 Bulletin 2004/10**

(73) Titulaire: **HUTCHINSON
75008 Paris (FR)**

(72) Inventeur: **NOE, Mathieu
F-91610 Ballancourt (FR)**

(74) Mandataire: **Jacquard, Philippe Jean-Luc
Cabinet ORES,
36,rue de St Pétersbourg
75008 Paris (FR)**

(56) Documents cités:
**DE-A- 19 517 630      DE-A- 19 621 700
FR-A- 2 680 848**

## Description

La présente invention a pour objet un dispositif d'amortissement de vibrations.

On utilise dans l'industrie des batteurs dynamiques pour éviter la propagation de vibrations dans une structure donnée.

Ils sont essentiellement basés sur des systèmes masse-ressort, tel que représentés dans le document DE-A- 19 517 630.

Dans certaines applications, notamment en aéronautique, et plus particulièrement dans le cas des hélicoptères, il est souhaitable que les performances des batteurs puissent être adaptées en fonction des différentes configurations de vol, et ce à l'aide d'une commande qui rende les caractéristiques du batteur aussi peu dépendantes que possible des conditions de pression, de température et/ou d'hygrométrie.

Selon un premier aspect, l'invention vise à résoudre ce problème, l'idée de base consistant à mettre en oeuvre un moteur électrodynamique dont on fait varier l'amortissement.

L'invention concerne ainsi un dispositif d'amortissement des vibrations comprenant un dispositif de conversion d'énergie mécanique en énergie électrique monté sur une embase destinée à être fixée sur une structure à calmer, caractérisé en ce que ledit dispositif de conversion comporte un moteur électrodynamique ayant une bobine reliée mécaniquement à l'embase et un circuit magnétique suspendu par au moins un ressort, en ce que la bobine est couplée à une charge électrique présentant une composante résistive et en ce qu'il présente un dispositif de commande pour faire varier la valeur de ladite composante résistive selon au moins deux valeurs.

La première valeur de commande peut correspondre à un premier amortissement (par exemple en laissant la bobine en circuit ouvert), et la deuxième valeur de commande à un amortissement plus important (par exemple en mettant la bobine en court-circuit).

L'invention concerne également une utilisation d'un dispositif d'amortissement dans un aéronef, notamment un hélicoptère, caractérisé en ce qu'il met en oeuvre, à l'aide d'un calculateur de vol, une commande du dispositif de commande selon la première valeur de commande lorsque l'aéronef est en vol statique et selon la deuxième valeur de commande lorsque l'aéronef est dans un état de changement de cap.

L'utilisation de batteurs dynamiques pose également le problème du fonctionnement selon une seule direction qui est celle de l'axe de symétrie du système.

Le problème posé est ainsi le fait de garantir des déplacements selon cet axe uniquement pour éviter des inconvénients tels que vibrations, parasites, frottements, voir destruction de la bobine.

L'idée de base consistant en une mise en oeuvre d'un ou plusieurs ressorts de centrage appropriés, est réalisée par un dispositif d'amortissement de vibrations comprenant un dispositif de conversion d'énergie monté sur une embase destinée à être fixée sur une structure, le dispositif de conversé d'énergie présentant une partie mobile suspendue par au moins un ressort, la partie mobile présentant au moins un ressort de centrage plat s'étendant entre une région intérieure ayant un premier diamètre et une région extérieure ayant un deuxième diamètre, ledit ressort de centrage présentant au moins deux découpes dont chacune forme une branche ayant au moins un tronçon tournant sa concavité vers l'extérieur du ressort.

Au moins une découpe peut être au moins en partie en spirale, par exemple en spirale parabolique.

Au moins une découpe peut présenter un tronçon externe droit.

Chaque découpe fait avantageusement entre 1 et 1,5 tour du périmètre de ressort.

Les découpes peuvent être au nombre de 3 et de préférence de 4, et dans ce dernier cas chaque découpe s'étend préférentiellement sur sensiblement un tour du périmètre de ressort.

Il est particulièrement avantageux qu'un ressort de centrage soit constitué d'un empilement de ressorts plats, notamment pour former une structure lamifiée. En effet, la raideur axiale et la contrainte maximale atteinte diminuent avec le nombre de couches empilées, ce qui permet en particulier d'adapter le rapport entre la raideur axiale et la raideur radiale du ressort de centrage. En outre, la contrainte maximale atteinte diminue avec l'épaisseur de chaque couche.

D'autres caractéristiques et avantages de l'invention apparaîtront mieux à la lecture de la description qui va suivre, donnée à titre d'exemple non limitatif, en liaison avec les dessins dans lesquels :

- la figure 1 montre une vue schématique en coupe d'un dispositif selon l'invention,
- les figures 2a et 2b représentent respectivement en perspective et ne coupe un dispositif selon un mode de réalisation préféré de l'invention,
- la figure 3 montre une réalisation d'un ressort de centrage ("spider") à trois branches, et
- la figure 4 montre une réalisation d'un ressort de centrage ("spider") à quatre branches.

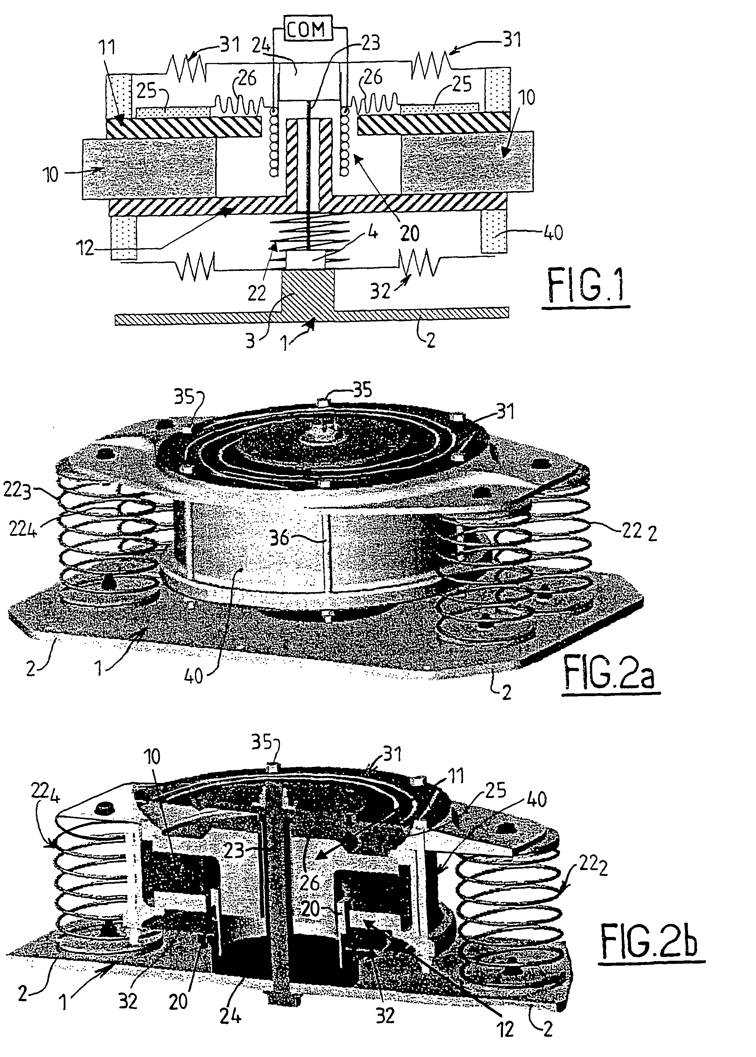

Le batteur représenté à la figure 1 présente une embase 1 comportant une plaque plane 2 destinée à être solidarisée à une structure à calmer. Une bobine 20 est solidaire de cette embase 1. A cet effet, une tige 23 porte à ses deux extrémités deux brides 3 et 24 dont l'une 3 est solidaire de l'embase 1 et dont l'autre 24 porte la bobine 20. La partie mobile qui comporte une pièce polaire supérieure 11, une pièce polaire inférieure 12 et un aimant 10 est montée sur un ressort 22 et est centrée par deux ressorts de centrage supérieur 31 et supérieur 32 montés sur un boîtier ou saladier 40.

On notera au niveau de la bobine 20 l'étanchéité procurée par le tissu ondulé 26 porté par l'anneau plat 26 monté sur la pièce polaire 11.

L'ensemble définit un moteur électrodynamique dont la bobine est fixe par rapport à l'embase 1 et ont la partie mobile est une masse $M_b$ constituée essentiellement par le circuit magnétique, c'est-à-dire les pièces polaires 11 et 12 et l'aimant 10.

Un circuit de commande permet de faire varier la valeur d'une charge résistive appliquée aux bornes de la bobine 20. Il peut s'agir d'une résistance variable, par exemple une varistance, dont la valeur est fonction d'une tension électrique, ou bien encore d'un rhéostat commandé par le dispositif de commande. On peut faire ainsi varier l'amortissement entre deux extrêmes, à savoir un amortissement très faible en laissant la bobine 20 en circuit ouvert, ou un amortissement maximal en mettant la bobine 20 en court-circuit, la résistance de charge étant alors égale à la composante résistive intrinsèque Ro de la bobine 20.

On peut choisir une valeur d'une résistance de charge plus élevée $R_1$ pour un premier amortissement relativement faible et plus faible $R_2$ pour un amortissement plus important.

Un amortissement relativement faible ou minimal convient particulièrement à un aéronef en vol statique, pour lequel les vibrations ont un régime établi pour lequel on confère au batteur un effet maximal, alors qu'un amortissement plus important peut être choisi lors d'un changement de cap pour éviter les transitoires susceptibles de déstabiliser le batteur et/ou de faire remonter le niveau vibratoire en cabine.

Lorsque le batteur fonctionne, un mouvement relatif entre le circuit magnétique de masse $M_b$ et l'embase 1 existe. La bobine 20 se comporte donc comme un générateur de force électromotrice $E_b = BL\,v$, BL désignant le facteur de force du moteur électrodynamique (en N/A) et v la vitesse relative entre le circuit magnétique de masse $M_b$ et l'embase 1.

On connecte la bobine 20 d'indépendance électrique $Z_b$ à une charge notée $Z_c$. Une force $F_a$ s'établit entre la bobine et le circuit de masse $M_b$, qui s'oppose à v (selon la loi de Lenz) et a pour expression :

$$F_a = \frac{(BL)^2}{Z_b + Z_c}\, V \qquad (1)$$

Nous venons de mettre en évidence l'expression d'une force d'amortissement.

Si on suppose que la charge est constituée d'un rhéostat (résistance réglable), nous pouvons alors faire varier le coefficient d'amortissement $C_b$ ($C_b = F_a$ / v) entre 2 valeurs extrêmes.

Pour obtenir $C_b$ maximum :

- il faut choisir un moteur électrodynamique dont les caractéristiques permettent de maximiser le rapport $(BL)^2 / Z_b$
- $Z_c$ doit être minimal ($Z_c = 0$, soit un court-circuit franc)

Pour obtenir $C_b$ minimum :

- il suffit d'ouvrir le circuit électrique ($Z_c = \infty$)

L'accord en fréquence du batteur est donné par la masse mobile et l'ensemble des raideurs qui lient cette masse à l'embase:

1. Raideur totale des ressorts de centrage 31 et 32 : Ks
2. Raideur totale du (des) ressort(s) de rappel 22 : Kr

Nous avons alors la relation :

$$M_b\,{}^*(2{}^*\pi{}^*F_b)^2 = Ks + Kr \qquad (2)$$

Pour répartir la raideur entre les ressorts de rappel et les ressorts de centrage 31 et 32, nous considérons les contraintes suivantes :

1. Les ressorts de centrage 31 et 32 ne sont pas sollicités lorsque la masse $M_b$ est soumise à une fois la gravité.
2. La somme Ks + Kr est fixée pour respecter la relation (2).

La contrainte n° 1 impose que le poids statique de la masse mobile $M_b$ soit repris par le(s) ressort(s) 22. Leur longueur à vide est donc calculée pour tenir compte de cette flèche statique, qui s'ajoute au mouvement dynamique : plus la raideur Kr est faible, plus la longueur à vide doit être grande. Il faut donc choisir Kr suffisamment élevé pour que ne se posent pas certaines difficultés d'intégration (encombrement, talonnement des ressorts, spires jointives).

Il n'est pas possible en pratique de faire tendre Ks vers une valeur arbitrairement faible, pour les raisons exposées ci-après.

Le batteur décrit fonctionne en une seule direction qui est celle de l'axe de symétrie du système (axe vertical Z sur la figure 1, passant par le centre de la pièce).

Il convient de garantir un mouvement relatif entre le circuit magnétique de masse $M_b$ et l'embase 1 selon cet axe uniquement afin d'éviter tout risque de destruction mécanique de la bobine 20.

Sont donc exclus a priori :

- les déplacements radiaux (selon les directions X et Y perpendiculaires à la direction Z)
- les rotations selon les axes X et Y

Pour assurer cette fonction, la masse $M_b$ est guidée par deux ressorts 31 et 32 disposés de part et d'autre du circuit de masse $M_b$. Ils sont solidaires en leur centre d'un axe 23 solidaire de l'embase 1 et à leur pourtour du circuit de masse $M_b$.

Parmi les autres techniques de guidage qui auraient pu être retenues citons :

1. Les douilles à billes : solution plus onéreuse, nécessitant un axe rectifié. De plus, les caractéristiques de frottement sec sont non linéaires et évoluent avec le temps (usure des zones de contact), ce qui aurait pour conséquence de modifier le comportement du batteur au cours de son cycle de vie. Il serait de plus nécessaire d'y adjoindre un système de blocage en rotation de la masse $M_b$ selon l'axe Z.

2. Les paliers polymères : solution nécessitant également un axe rectifié. De plus, les caractéristiques de frottement sec sont non linéaires et évoluent avec le temps (usure des zones de contact), ce qui aurait pour conséquence de modifier le comportement du batteur au cours de son cycle de vie. Il serait de plus nécessaire d'y adjoindre un système de blocage en rotation de la masse $M_b$ selon l'axe Z.

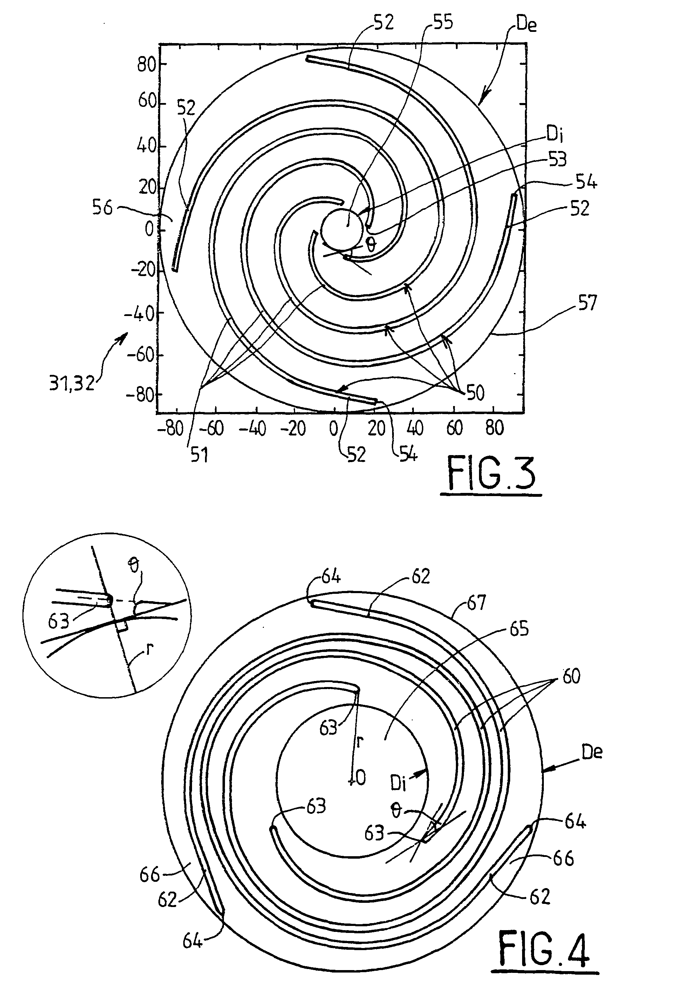

La figure 3 représente un ressort de centrage 31, 32 en métal, qui présente 4 découpes 50 (ou saignées traversantes) qui forment autant de branches qui sont réparties régulièrement à 90° du périmètre d'une ouverture 55 et qui s'étendent depuis une extrémité interne 53 à proximité de l'ouverture centrale 55 de diamètre $D_i$ et, jusqu'à une extrémité externe 54 à proximité d'un contour externe 57 de diamètre De. Ces découpes 50 ont un profil arrondi convexe vers l'extérieur du ressort, en particulier en forme de spirale, et de préférence de spirale parabolique.

Vers leur extrémité 54, les découpes 50 présentent préférentiellement un tronçon linéaire 52 dont la fonction est d'éviter des concentrations de contraintes ainsi qu'il sera expliqué ci-après. Dans l'exemple représenté, les branches 50 forment un peu plus d'un tour du périmètre du ressort entre leurs extrémités 53 et 54.

La figure 4 représente un mode de réalisation à 3 branches dont les extrémités internes 63 sont réparties à 90° sur le pourtour d'une ouverture centrale de diamètre Di et qui évoluent jusqu'à une extrémité 64 à proximité du contour externe 67 de diamètre De. Comme dans le cas précédent, le profil est avantageusement en spirale, de préférence parabolique. Il s'étend sur un peu plus d'un tour du ressort. Un tronçon d'extrémité linéaire 62 est avantageusement prévu pour éviter des concentrations de contraintes.

Les extrémités 53, 54, 63, 64 sont suffisamment espacées des ouvertures 55, 65 et des contours respectifs 57, 67 pour permettre un bon encastrement du ressort sans concentration de contraintes à ces extrémités.

Il est particulièrement avantageux de réaliser les ressorts 31, 32 sous forme d'un empilement de ressorts par exemple sous forme d'une structure lamifiée c'est-à-dire d'un empilement de ressorts individuels solidarisés entre eux par exemple par collage. Ceci permet de modifier la raideur axiale qui diminue avec le nombre de couches, de même que la contrainte maximale atteinte.

Ceci permet en particulier d'ajuster le rapport entre la raideur axiale et la raideur radiale.

Les avantages des ressorts de centrage 31 et 32 sont les suivants :

1. Aucun contact entre pièces mobiles : aucune non linéarité n'est introduite, pas de frottements parasites.

2. Simplicité de réalisation.

La réalisation des ressorts de centrage 31 et 32 respecte avantageusement un certain nombre de contraintes :

1. Raideur axiale (selon axe Z) : elle doit être inférieure à une valeur maximale $Kz = M_b*(2*\pi*F_b)^2$

2. Raideur radiale (dans le plan X, Y), selon n'importe quelle direction radiale : elle doit être suffisamment grande pour éviter que les sollicitations radiales appliquées au batteur ne conduisent à des déplacements radiaux relatifs entre la bobine et le circuit magnétique par flambage des ressorts tels qu'ils pourraient conduire à l'endommagement de ladite bobine. Cette caractéristique doit également être maintenue quelle que soit la position de la masse mobile selon l'axe Z. Il faut donc éliminer les conceptions de ressorts qui sont susceptibles de flamber aux excursions maximum de la masse mobile. L'adoption de ressorts de centrage présentant des découpes formant des branches concaves vers l'extérieur permet d'éviter le flambage.

3. Rapport encombrement (radial) / débattement du ressort aussi faible que possibles.

4. Contraintes maximales dans la matière telle que la pièce soit dimensionnée pour un nombre de cycles très important ($> 10^8$ cycles). L'état de contrainte maximale est atteint pour les débattements crête.

Le mode de réalisation préféré met en oeuvre des découpes en spirale parabolique (ou selon un ou plusieurs axes de cercle approximant un profil en spirale parabolique).

Les paramètres de conception sont :

1. Le nombre de branches (au moins 2, de préférence 4).

2. Diamètres intérieur $D_i$ et extérieur De.

3. Epaisseur du ressort.

4. Angle de départ θ de la découpe (côté diamètre intérieur)-(voir encadré figure 4). Plus la valeur de θ est voisine de 90°, plus la variation de contrainte est progressive. Lorsque θ est proche de 0°, ou a une variation brusque de la contrainte dans la zone de l'encastrement.

5. Arrêt de la découpe (côté diamètre extérieur) : l'arrêt se fait progressivement sur une section de matière 56, 66 qui s'évase de manière pratiquement triangulaire, ceci afin d'éviter les concentrations locales de contraintes sur les faibles rayons de courbure. A cet effet, on peut adopter pour les branches un profil terminal linéaire 52, 62.

## Revendications

1. Dispositif d'amortissement de vibrations comprenant un dispositif de conversion d'énergie mécanique en énergie électrique monté sur une embase (2) destinée à être fixée sur une structure, ledit dispositif de conversion comportant un moteur électrodynamique ayant une bobine (20) reliée mécaniquement à l'embase, **caractérisé en ce que** ledit dispositif de conversion comporte en outre un circuit magnétique (10, 11, 12) suspendu par au moins un ressort (22), et **en ce que** la bobine (20) est couplée à une charge électrique présentant une composante résistive et présente un dispositif de commande (COM) pour faire varier la valeur de ladite composante résistive selon au moins deux valeurs.

2. Dispositif selon la revendication 1, **caractérisé en ce que** le dispositif de commande (COM) présente une première valeur de commande de la composante résistive correspondant à un premier amortissement et une deuxième valeur de commande correspondant à un deuxième amortissement plus important.

3. Dispositif selon la revendication 2, **caractérisé en ce que**, pour la première valeur de commande, la bobine (20) est en circuit ouvert.

4. Dispositif selon une des revendications 2 ou 3, **caractérisé en ce que**, pour la deuxième valeur de commande, la bobine (20) est en court-circuit.

5. Utilisation d'un dispositif d'amortissement selon une des revendications précédentes dans un aéronef, notamment un hélicoptère, **caractérisé en ce qu'**il met en oeuvre, à l'aide d'un calculateur de vol une commande du dispositif de commande selon la première valeur de commande lorsque l'aéronef est en vol statique et selon la deuxième valeur de commande lorsque l'aéronef est dans un état de changement de cap.

## Patentansprüche

1. Vorrichtung zur Schwingungsdämpfung mit einer Umwandlungseinrichtung von mechanischer Energie in elektrische Energie, welche auf einer auf einem Aufbau befestigbaren Fußplatte montiert ist, wobei die Umwandlungseinrichtung einen elektrodynamischen Motor mit einer Spule (20) aufweist, die mechanisch mit der Fußplatte verbunden ist, **dadurch gekennzeichnet, dass** die Umwandlungseinrichtung weiterhin einen magnetischen Kreis (10, 11, 12) aufweist, der durch mindestens eine Feder (22) aufgehängt ist, und dass die Spule (20) mit einer elektrischen Last mit einer ohmschen Komponente gekoppelt ist und eine Steuereinrichtung (COM) zur Veränderung der ohmschen Komponente gemäß zumindest zwei Werten aufweist.

2. Vorrichtung nach Anspruch 1, **dadurch gekennzeichnet, dass** die Steuereinrichtung (COM) einen ersten Steuerwert der ohmschen Komponente, der zu einer ersten Dämpfung korrespondiert und einen zweiten Steuerwert aufweist, der zu einer zweiten, wichtigeren Dämpfung korrespondiert.

3. Vorrichtung nach Anspruch 2, **dadurch gekennzeichnet, dass** sich die Spule (20) bei dem ersten Steuerwert im Leerlauf bzw. in einem offenen Kreis befindet.

4. Vorrichtung nach Anspruch 2 oder 3, **dadurch gekennzeichnet, dass** die Spule (20) bei dem zweiten Steuerwert kurzgeschlossen ist.

5. Verwendung einer Vorrichtung zur Schwingungsdämpfung nach einem der vorhergehenden Ansprüche in einem Luftfahrzeug, insbesondere Hubschrauber, **dadurch gekennzeichnet, dass** mit Hilfe eines Flugrechners bzw. -computers eine Betätigung der Steuereinrichtung gemäß dem ersten Steuerwert erfolgt, wenn das Luftfahrzeug sich in einem statischen Flug befindet, und gemäß dem zweiten Steuerwert erfolgt, wenn sich das Luftfahrzeug in einem Kursänderungszustand befindet.

## Claims

1. A damper device for damping vibration comprising a converter device for converting mechanical energy into electrical energy that is mounted on a baseplate (2) for fixing to a structure, said converter device comprising an electrodynamic motor having a coil (20) mechanically connected to the baseplate, the device being **characterized in that** said converter device further comprises a magnetic circuit (10, 11, 12) suspended by at least one spring (22), and **in that** the coil (20) is coupled to an electrical load presenting a resistive component, and **in that** it presents a control device (COM) for causing the resistance of said resistive component to vary with at least two values.

2. A device according to claim 1, **characterized in that** the control device (COM) has a first control value for the resistive component corresponding to a first level of damping, and a second control value corresponding to a second level of damping that is greater.

3. A device according to claim 2, **characterized in that** for the first control value, the coil (20) is open circuit.

4. A device according to claim 2 or claim 3, **characterized in that** for the second control value, the coil (20) is short circuit.

5. The use of a damper device according to any preceding claim, in an aircraft, in particular in a helicopter, **characterized in that** it uses a flight computer to cause the control device to take up the first control value when the aircraft is in steady flight and the second control value when the aircraft is in a heading-changing state.

FIG.1

FIG.2a

FIG.2b

FIG.3

FIG.4